# EUROPÄISCHE PATENTANMELDUNG

(11) **EP 4 506 548 A1**
(43) Veröffentlichungstag der Anmeldung: **12.02.2025**
(21) Anmeldenummer: 24190980.3
(22) Anmeldetag: 25.07.2024
(51) Int. Cl.: F02C 6/08, F02K 3/075, F04D 27/02

(54) **LUFTFÜHRUNGSSYSTEM**

(30) Priorität: 08.08.2023 DE 102023121050
(71) Anmelder: MTU Aero Engines AG, 80995 München (DE)
(72) Erfinder: Busch, Nils, 80995 München (DE)

(57) **Zusammenfassung**

Die Erfindung betrifft ein Luftführungssystem (10) für ein Flugtriebwerk (1) mit einem Hauptstromkanal (2) und einem Zweigkanal (3), insbesondere kann der Zweigkanal ein Nebenstromkanal und/oder ein Zapfluftkanal sein, wobei der Zweigkanal (3) an einem Verbindungsbereich (4) von dem Hauptstromkanal (2) abzweigt, umfassend eine an oder in dem Verbindungsbereich (4) angeordnete Verschlussvorrichtung (20) zur Trennung des Zweigkanals (3) von dem Hauptstromkanal (2), wobei die Verschlussvorrichtung (20) zumindest einen Verschlussring (30) zum Verschließen des Verbindungsbereichs (4) aufweist.

## Beschreibung

Die Erfindung betrifft ein Luftführungssystem für ein Flugtriebwerk mit einem Hauptstromkanal und einem Zweigkanal, insbesondere kann der Zweigkanal ein Nebenstromkanal und/oder ein Zapfluftkanal sein, wobei der Zweigkanal an einem Verbindungsbereich von dem Hauptstromkanal abzweigt.

In Flugtriebwerken wird die Luft in einem Verdichter, unterteilt in eine Vielzahl von Verdichterstufen, verdichtet, in eine Brennkammer geleitet, mit Kerosin gemischt und gezündet und schließlich in einer Turbine entspannt, um die im Verdichter und der Brennkammer zugeführte Energie zu nutzen. Im Bereich der Verdichter wird eine zumindest teilweise verdichtete Luft in vielen Fällen für andere Zwecke abgeführt. So ist in einigen Flugtriebwerken, insbesondere in für den Überschallbereich konzipierten, sogenannten Low-Bypass-Triebwerken, ein Nebenstromkanal vorgesehen, durch den die nur teilweise verdichtete Luft abgesaugt wird, um einen größeren Vortrieb zu erzeugen. In vielen zivilen Turbofantriebwerken für kommerzielle Einsatzzwecke wird die teilweise verdichtete Luft als Zapfluft für Kabinenapplikationen und zur Kühlung der stromabwärts gelegenen Triebwerkskomponenten wie Brennkammer und Turbine genutzt.

Dabei kann beispielsweise zur Strömungsführung in einen auch als Bypass-Kanal bezeichneten Nebenstromkanal ein Luftführungssystem erforderlich sein, das den abzuführenden Luftstrom einstellen kann. Bekannt ist beispielsweise ein Triebwerk gemäß EP2233703A1, in dem ein Zapfluftsystem mit im Wesentlichen radial verlaufenden Zapfluftkanälen gezeigt ist, dessen Verschlusssystem einen ringförmigen, in Axialrichtung verschiebbaren Verschlussring sowie einen in Axialrichtung neben den Zapfluftkanälen angeordneten Aktuator zur Ansteuerung des Verschlussrings aufweist. Nachteilig ist die Baugröße dieses Luftführungssystems vergleichsweise groß, denn der Aktuator steuert den ringförmigen Verschlussring mittels einer in axialer Richtung verlaufenden Antriebsstange und zwar in einem von einem Verbindungsbereich zwischen Zapfluftkanal und Hauptstromkanal weit beabstandeten Bereich. Dadurch ergibt sich ferner eine verlustbehaftete Lufttasche, wenn der Verschlussring geschlossen ist. Ferner ist der Verschlussring als steifer Vollkörper ausgebildet und somit nachteilig vergleichsweise schwer.

Es ist daher eine Aufgabe der Erfindung ein Luftführungssystem für ein Flugtriebwerk mit einem Hauptstromkanal und einen Zweigkanal anzugeben, das verringerte Verluste erzeugt.

Zur Lösung dieser Aufgabe wird erfindungsgemäß ein Luftführungssystem nach Anspruch 1 für ein Flugtriebwerk mit einem Hauptstromkanal und einem Zweigkanal vorgeschlagen, insbesondere kann der Zweigkanal ein Nebenstromkanal und/oder ein Zapfluftkanal sein, wobei der Zweigkanal an einem Verbindungsbereich von dem Hauptstromkanal abzweigt. Das Luftführungssystem umfasst eine an oder in dem Verbindungsbereich angeordnete Verschlussvorrichtung zur Trennung des Zweigkanals von dem Hauptstromkanal, wobei die Verschlussvorrichtung zumindest einen Verschlussring zum Verschließen des Verbindungsbereichs aufweist.

Vorteilhaft wird durch die Anordnung des Verschlussrings in dem Verbindungsbereich zwischen Zweigkanal und Hauptstromkanal in einem geschlossenen Zustand der Verschlussvorrichtung eine bündige Oberfläche in dem Hauptstromkanal geschaffen, so dass ein Luftführungssystem mit sehr geringen Strömungsverlusten geschaffen ist.

Der Hauptstromkanal kann auch als Kernstromkanal bezeichnet werden. In dem Hauptstromkanal sind in Strömungsrichtung nacheinander zumindest ein Verdichter, eine Brennkammer und zumindest eine Turbine vorgesehen, wobei der Zweigkanal in einem Bereich des Verdichters, insbesondere eines Niederdruckverdichters, abzweigt. Der Hauptstromkanal und der Zweigkanal des Flugtriebwerkes können stromabwärts des Verbindungsbereichs durch ein Zwischengehäuse voneinander in Radialrichtung getrennt angeordnet sein. Der Verschlussring kann vorzugsweise aus einem Metall oder einer Metalllegierung, insbesondere aus Titan oder einer Titanbasislegierung bestehen.

Weitere Vorteile und Merkmale ergeben sich aus der nachfolgenden Beschreibung einiger bevorzugter Ausführungsbeispiele sowie den abhängigen Ansprüchen.

In einer ersten Ausführung des Luftführungssystems ist der Verschlussring aus zumindest zwei miteinander verbundenen, zumindest in Umfangsrichtung gebogenen Flachelementen, insbesondere blechartigen ringförmigen Flachelementen, ausgebildet. Die beiden Flachelemente erlauben es vorteilhaft den Verschlussring an die herrschenden Strömungen und das vorhandene Gehäuse des Zweigkanals anzupassen. Gleichzeitig reduziert sich durch die Verwendung zweier Flachelemente vorteilhaft das Gewicht des Verschlussrings. Eine radial innere Oberfläche eines radial unteren ersten Flachelements kann zur Anlage an einem Zwischengehäuseteil dienen. Eine radial äußere Oberfläche des radial oberen zweiten Flachelement kann in einem geschlossenen Zustand der Verschlussvorrichtung auf einer gleichen Höhe in radialer Richtung mit einem nachfolgenden inneren Gehäuseabschnitt des Zweigkanals angeordnet sein und das zweite Flachelement kann insbesondere bündig an dem nachfolgenden inneren Gehäuseabschnitt anliegen. Die Flachelemente können jeweils eine der Strömung zugewandte Oberfläche aufweisen, wobei das erste, radial innere Flachelement in einem geschlossenen Zustand der Verschlussvorrichtung einen radial äußeren Gehäuseabschnitt des Hauptströmungskanals bildet und/oder das zweite, radial äußeres Flachelement, insbesondere in einem geöffneten Zustand der Verschlussvorrichtung, einen radial inneren Gehäuseabschnitt des Zweigkanals bildet. Die Flachelemente des Verschlussrings können zunächst gefräst und dann verschweißt werden.

In einer bevorzugten Weiterbildung ist ein erstes Flachelement des Verschlussrings in Axialrichtung eben ausgebildet, um ein Gleiten in Axialrichtung zu ermöglichen. Dies verringert den Widerstand und ermöglicht vorteilhaft eine gleichmäßige Bewegung des Verschlussrings.

In einer besonders bevorzugten Weiterbildung ist ein zweites Flachelement des Verschlussrings in Axialrichtung radial nach außen gekrümmt, insbesondere konvex, ausgebildet, um vorteilhaft ein laminares Überströmen in Axialrichtung der Strömung in dem Zweigkanal zu ermöglichen. Dadurch kann in dem geöffneten Zustand der Verschlussvorrichtung vorteilhaft der Strömungswiderstand verringert werden.

In einer weiteren Ausbildung des Luftführungssystem sind die beiden Flachelemente an einer Ringvorderkante, die insbesondere eine in Axialrichtung vordere Kante des Verschlussrings ist, miteinander verbunden sind. Dies ermöglicht vorteilhaft eine steifen und gleichzeitig leichte Ausführungsform des Verschlussrings. Bevorzugt bilden die Flachelemente einen Winkel, so dass vorteilhaft eine Strömung aus dem Hauptstromkanal über der Verschlussring zumindest in einem geöffneten Zustand des Verschlussvorrichtung verlustarm in den Zweigkanal strömen kann. Der Winkel kann zumindest 10° und höchstens 45° betragen, insbesondere wenn es sich bei dem Zweigkanal um einen Nebenstromkanal handelt. Der Winkel kann bevorzugt mehr als 30° und höchstens 90° betragen, insbesondere wenn es sich bei dem Zweigkanal um einen Zapfluftkanal handelt.

In einer weiteren Ausbildung des Luftführungssystems sind die beiden Flachelemente durch eine Versteifungsstrebe, insbesondere zu einem Hohlkörper, verbunden. Es können auch mehrere Versteifungsstreben in Umfangsrichtung verteilt vorgesehen sein. Durch Versteifungsstreben kann vorteilhaft die Steifigkeit des Verschlussrings weiter erhöht werden, ohne dass das Gewicht stark zunimmt. Die Versteifungsstrebe kann in einem in Axialrichtung hinteren Bereich des Verschlussrings angeordnet sein. Ihre größte Ausdehnung in einem Querschnitt in einem Meridianschnitt kann sich in Radialrichtung erstrecken oder zu der Radialrichtung angewinkelt verlaufen.

Ferner kann in einer Ausbildung des Luftführungssystems der Verschlussring, insbesondere mit dem eben ausgebildeten ersten Flachelement, über zumindest ein radial innen in dem Zweigkanal befestigtes Gleitelement gleiten, insbesondere wobei das Gleitelement als ein Gleitstein aus einem Kunststoff, besonders bevorzugt aus einem Polyimid, ausgebildet ist. Dies ermöglicht eine besonders reibungsarme Bewegung des Verschlussrings. Es kann vorgesehen sein, dass eine Mehrzahl von Gleitelementen in Umfangsrichtung an dem Zwischengehäuse verteilt befestigt ist und in Radialrichtung innerhalb des ersten Flachelements angeordnet ist.

Darüber hinaus kann in dem Luftführungssystem vorgesehen sein, dass die Verschlussvorrichtung einen, insbesondere genau einen, Aktuator zum Verschieben des Verschlussrings aufweist. Insbesondere durch die hohe Steifigkeit des Verschlussrings und das geringe Gewicht des Verschlussrings aufgrund der Flachelemente kann ein Aktuator vorteilhaft vergleichsweise klein ausgebildet sein, denn der Aktuator muss geringere Kräfte aufbringen, um den Verschlussring zu bewegen. Die Verschlussvorrichtung kann durch den Aktuator in einen geöffneten Zustand, in einen geschlossenen Zustand oder eine Zwischenstellung verstellt werden. In einigen Ausführungsformen des Luftführungssystems kann vorgesehen sein, dass mehrere Aktuatoren in Umfangsrichtung verteilt vorgesehen sind.

In einer bevorzugten Ausführung des Luftführungssystems ist ferner vorgesehen, dass der Verschlussring von dem Aktuator in eine Axialrichtung und Umfangsrichtung verschiebbar ist. Dies kann insbesondere durch eine Drehbewegung mit gleichzeitiger axialer Verschiebung erzielt werden. Eine solche Kinematik erlaubt es einen besonders einen Aktuator mit Drehantrieb vorzusehen, der in der regelmäßig vorteilhaft einen geringeren Bauraum einnimmt als beispielsweise ein Linearaktuator.

In einer besonders bevorzugten Weiterbildung des Luftführungssystem ist ein Antrieb des Aktuators radial außerhalb des Zweigkanals angeordnet. Dies erlaubt es vorteilhaft auf einfache Weise den inneren Bauraum des Zwischengehäuses zwischen Zweigkanal und Hauptstromkanal klein zu halten. Der Antrieb kann in einem Querschnitt normal zur Axialrichtung insbesondere in einer radial obersten Position angeordnet sein. Dies erlaubt es dem Antrieb beim Verschieben des Verschlussrings vorteilhaft kaum gegen die Gewichtskraft des Verschlussrings arbeiten zu müssen. Der Antrieb kann ein elektrischer Motor oder ein hydraulischer Antrieb, insbesondere hydraulischer Zylinder sein.

Darüber hinaus kann der Aktuator des Luftführungssystem derart weitergebildet sein, dass eine Antriebsstange, des Aktuators von radial außerhalb des Zweigkanals durch den Zweigkanal und in ein den Hauptstromkanal und den Zweigkanal radial voneinander trennendes Zwischengehäuse geführt und durch einen Verstellhebel des Aktuators mit dem Verschlussring schwenkbar verbunden ist, um den Verschlussring in Axialrichtung und Umfangsrichtung zu verschieben. Die Führung des Antriebsstange durch den Zweigkanal erlaubt vorteilhaft den Bauraum im Triebwerk selbst zu verringern und insbesondere im Fall des Nebenstromkanals diesen nahe des Hauptstromkanals anzuordnen, um den Nebenstrom mit dem Hauptstrom auf einfache Weise wieder zusammenführen zu können und/oder die weiter stromabwärts angeordneten Komponenten des Flugtriebwerks effizient kühlen zu können. Das Flugtriebwerk muss entsprechend angepasst sein. Die Antriebsstange kann einstückig ausgebildet sein und/oder ein Gehäuse aufweisen. Die Verschlussvorrichtung kann einen inneren Gehäuseabschnitt und einen äußeren Gehäuseabschnitt des Zweigkanals umfassen, wobei die inneren und äußeren Gehäuseabschnitte Öffnungen zur Führung des Drehzylinders aufweisen. Die Querschnitte der Antriebsstange und/oder ihres Gehäuses kann an den Öffnungen komplementär zu den Querschnitten der Öffnungen der Gehäuseabschnitte ausgebildet sein. Eine Schwenkachse des Verstellhebels an dem Verschlussring kann einer vorteilhaften Weiterbildung in Axialrichtung vor einer Längsachse der Antriebsstange angeordnet sein, so dass die Drehmomentaufbringung durch den Aktuator stets ausreichend ist und so vorteilhaft eine Schließbewegung stabil ausgeführt werden kann.

In einer weiteren bevorzugten Weiterbildung des Luftführungssystems ist zumindest ein Führungshebel der Verschlussvorrichtung mit dem Zwischengehäuse schwenkbar verbunden, um eine Gleitbewegung des Verschlussrings zu stabilisieren. Es können auch mehrere Führungshebel in Umfangsrichtung verteilt in dem Zwischengehäuse angeordnet sein.

Schließlich wird in einem weiteren erfindungsgemäßen Aspekt ein Flugtriebwerk mit einem Hauptstromkanal und einem Zweigkanal vorgeschlagen, wobei der Zweigkanal an einem Verbindungsbereich von dem Hauptstromkanal abzweigt, umfassend eines der oben beschriebenen Luftführungssysteme. Das Flugtriebwerk kann insbesondere ein Low-Bypass-Flugtriebwerk sein.

Die Erfindung wird bezüglich der nachfolgenden Zeichnungen anhand eines bevorzugten Ausführungsbeispiels der Erfindung näher erläutert.
- Fig. 1: zeigt ein Ausführungsbeispiel eines erfindungsgemäßen Flugtriebwerks mit einem ersten Ausführungsbeispiel eines erfindungsgemäßen Luftführungssystems
- Fig. 2: zeigt das erste Ausführungsbeispiel eines erfindungsgemäßen Luftführungssystems in einem geöffneten Zustand
- Fig. 3: zeigt das erste Ausführungsbeispiel des erfindungsgemäßen Luftführungssystems in einem geschlossenen Zustand
- Fig. 4: zeigt das erste Ausführungsbeispiel eines erfindungsgemäßen Luftführungssystem in einer Frontansicht

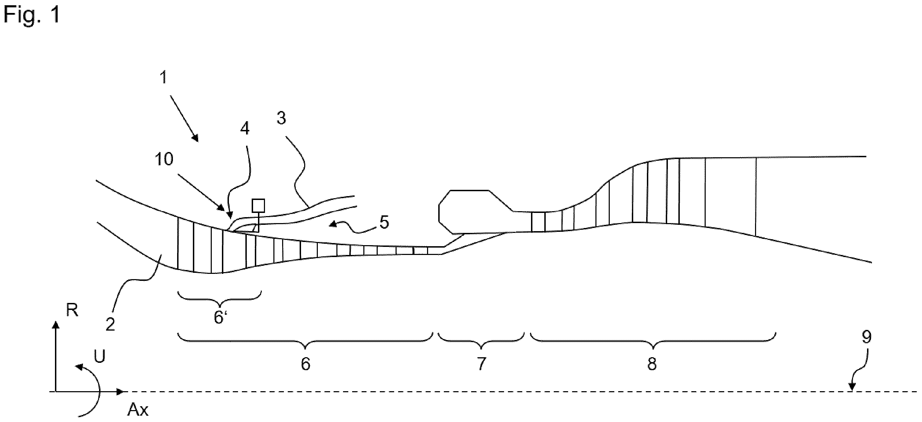

**Fig. 1** zeigt ein schematisch dargestelltes Ausführungsbeispiel eines Flugtriebwerks 1 in einem Meridianschnitt mit einem Hauptstromkanal 2 und einem Zweigkanal 3, wobei der Zweigkanal 2 als ein Nebenstromkanal ausgebildet ist. Der Zweigkanal 3 zweigt an einem Verbindungsbereich 4 von dem Hauptstromkanal 2 ab, wobei ein Zwischengehäuse 5 hinter dem Verbindungsbereich 4 die beiden Kanäle 2, 3 in radialer Richtung voneinander trennt. Der Zweigkanal 3 verläuft in dem vorliegenden Ausführungsbeispiel im Wesentlichen parallel zu dem Hauptstromkanal. In dem Hauptstromkanal 2 sind in Strömungsrichtung ein Verdichter 6 mit einem Niederdruckverdichter 6`, eine Brennkammer 7 und eine Turbine 8 angeordnet, wobei der Verbindungsbereich 4 in dem Niederdruckverdichter 6' angeordnet ist. Das Flugtriebwerk 1 weist eine Triebwerksachse 9 auf, anhand derer eine parallel zu der Triebwerksachse 9 verlaufende Axialrichtung Ax, eine senkrecht zu der Triebwerksachse 9 verlaufende Radialrichtung R und eine um die Triebwerksachse verlaufende Umfangsrichtung U des Triebwerks 1 dargestellt sind.

An dem Verbindungsbereich 4 ist ein erfindungsgemäßes Luftführungssystem 10 vorgesehen, das den Hauptstromkanal 2 von dem Zweigstromkanal 3 trennen kann.

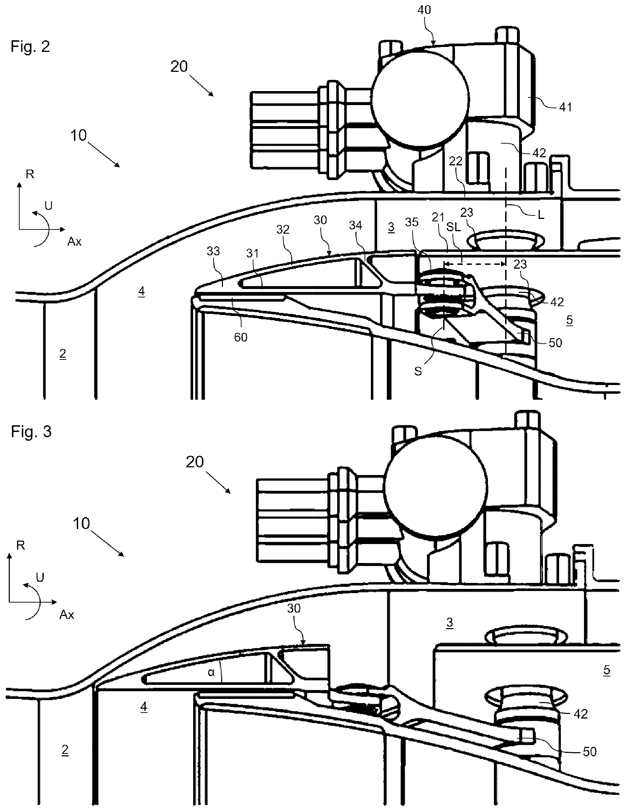

In den **Fig. 2 und 3** ist das erste Ausführungsbeispiel des erfindungsgemäßen Luftführungssystems 10 näher beschrieben. Das Luftführungssystem 10 umfasst eine Verschlussvorrichtung 20 zur Trennung des Zweigkanals 3 von dem Hauptstromkanal 2. In **Fig. 2** ist die Verschlussvorrichtung 20 in einem geöffneten Zustand gezeigt, in **Fig. 3** ist die Verschlussvorrichtung 20 in einem geschlossenen Zustand gezeigt.

Dabei weist die Verschlussvorrichtung 20 einen den Hauptstromkanal 2 vollständig umlaufenden Verschlussring 30 zum Verschließen des Verbindungsbereichs 4 auf. Ferner weist die Verschlussvorrichtung 20 genau einen Aktuator 40 zum Verschieben des Verschlussrings 30 radial außerhalb des Zweigkanals 3 auf. Der Verschlussring 30 kann von dem Aktuator 40 in eine Axialrichtung Ax verschoben und Umfangsrichtung U gedreht werden. Die Verschlussvorrichtung 20 kann dadurch durch den Aktuator 40 in den geöffneten Zustand, in den geschlossenen Zustand oder in eine Zwischenstellung verstellt werden.

Der Verschlussring 30 ist aus zwei miteinander verbundenen Flachelementen 31, 32 ausgebildet. Die beiden Flachelemente 31, 32 sind blechförmig ausgebildet und in Umfangsrichtung U gebogenen. Die beiden Flachelemente bilden jeweils eine der Strömung zugewandte Oberfläche, wobei ein erstes radial inneres Flachelement 31 eben ausgebildet ist und bei einer Verstellbewegung über eine Vielzahl von als jeweils ein Gleitstein aus Polyimid ausgebildete Gleitelemente 60 gleitet. Ein zweites, radial äußeres Flachelement 32 ist in dem in Fig. 2 gezeigten geöffneten Zustand der Verschlussvorrichtung 20 der Strömung in dem Zweigkanal 3 zugewandt, radial nach außen gekrümmt ausgebildet und leitet die Strömung in den stromabwärtigen Zweigkanal 3. Die stromabwärtige Kante des zweiten Flachelements 32 ist dabei auf gleicher radialer Höhe wie ein Gehäuseabschnitt des Zwischengehäuses 5. Das zweite Flachelement 32 liegt an diesem Gehäuseabschnitt an, so dass die axiale Bewegung des zweiten Flachelements 32 durch den Gehäuseabschnitt begrenzt wird. Somit ist vorteilhaft auf einfache Weise eine Anlagefläche geschaffen. Die beiden Flachelemente 31, 32 sind an einer Ringvorderkante 33, die eine in Axialrichtung Ax vordere Kante des Verschlussrings 30 ist, miteinander verbunden. Sie bilden einen Winkel α von etwa 20°, so dass eine Strömung aus dem Hauptstromkanal 2 über den Verschlussring 30 zumindest in einem geöffneten Zustand des Verschlussvorrichtung 10 laminar und damit verlustarm in den Zweigkanal 3 strömen kann.

Der Verschlussring 30 umfasst in einem axial hinteren Bereich ferner eine stabilisierende und festigende Versteifungsstrebe 34 zwischen den beiden Flachelementen 31, 32, wobei die Versteifungsstrebe 34 zusammen mit den beiden Flachelementen 31, 32 einen Hohlkörper ausgebildet. Der Verschlussring besteht aus einer Titanbasislegierung. Zur Herstellung des Verschlussrings 30 werden die Flachelemente 31, 32 des Verschlussrings 30 zunächst gefräst und dann verschweißt.

Der Aktuator 40 der Verschlussvorrichtung 20 umfasst einen hydraulischen Antrieb 41, eine einstückig ausgebildete Antriebsstange 42, die um ihre Längsachse L von dem Antrieb 41 rotiert werden kann, sowie einen Verstellhebel 50, der an der Antriebsstange 42 befestigt ist und somit ebenfalls um die Längsachse L der Antriebsstange 42 verschwenkt werden kann. An einem der Antriebsstange 42 abgelegenen Ende des Verstellhebels 50 ist dieser an dem Verschlussring 30 schwenkbar an einem Schwenkgelenk 35 angelenkt. Das Schwenkgelenk 35 umfasst eine Schwenkachse S, die in dem geschlossenen Zustand der Verschlussvorrichtung um einen Abstand SL von der Längsachse L der Antriebsstange 42 beabstandet ist. Dadurch wird vorteilhaft verhindert, dass sich der Verschlussrings 30 verklemmt oder von dem Antrieb 41 des Aktuator 40 ein nicht ausreichend großes Drehmoment erzeugt werden kann, um den Verschlussring 30 zu schließen. Die Verschlussvorrichtung 20 umfasst einen inneren Gehäuseabschnitt 21 des Zwischengehäuses 5 und einen äußeren Gehäuseabschnitt 22 des Zweigkanals 3, wobei die inneren und äußeren Gehäuseabschnitte 21, 22 Öffnungen 23 zur Führung des Drehzylinders aufweisen. Die Querschnitte eines nicht dargestellten Gehäuses der Antriebsstange 42 sind an den Öffnungen 23 komplementär zu den Querschnitten der Öffnungen 23 der Gehäuseabschnitte 21, 22 ausgebildet, so dass möglichst wenig Luft aus dem Zweigkanal entweichen kann.

Um die Verschlussvorrichtung 20 zu schließen und den Verschlussring 30 in dem Verbindungsbereich 4 zwischen dem Hauptstromkanal 2 und dem Zweigkanal 3 anzuordnen, kann der Aktuator 40 betätigt werden. Der Antrieb 41 des Aktuators 40 dreht dann die Antriebsstange 42 den Verstellhebel 50. Der Verstellhebel 50 verschiebt den Verschlussring 30 in Axialrichtung Ax und dreht den Verschlussring 30 in Umfangsrichtung U.

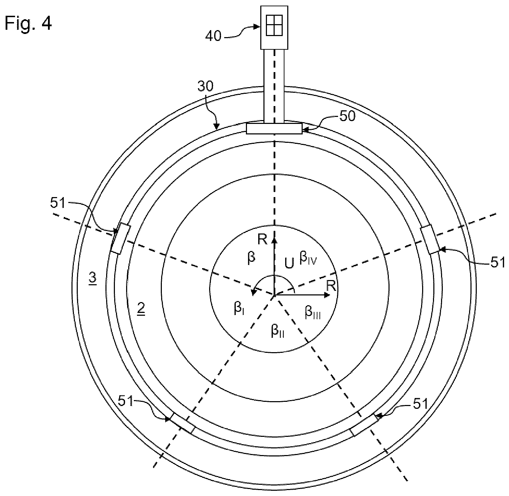

Um die Führung des Verschlussrings 30 gleichmäßig in Umfangsrichtung U zu gewährleisten sind eine Vielzahl, in dem vorliegenden Ausführungsbeispiel vier gleichmäßig um die Winkel β_{I-IV} von einander beabstandete Führungshebel 51 vorgesehen. In **Fig. 4** ist die Anordnung des Verstellhebels 50 und der Führungshebel 51 beispielhaft in einer Frontansicht des Flugtriebwerks 1 dargestellt. Der Antrieb 41 kann dabei insbesondere in einer radial obersten Position angeordnet sein. Die Winkel β_{I-IV} können auch voneinander verschieden ausgebildet sein.

### Bezugszeichenliste

- 1: Flugtriebwerk
- 2: Hauptstromkanal
- 3: Zweigkanal
- 4: Verbindungsbereich
- 5: Zwischengehäuse
- 6: Verdichter
- 6`: Niederdruckverdichter
- 7: Brennkammer
- 8: Turbine
- 9: Triebwerksachse

- 10: Luftführungssystem
- 20: Verschlussvorrichtung
- 21: Innerer Gehäuseabschnitt
- 22: Äußerer Gehäuseabschnitt

- 30: Verschlussring
- 31: Erstes, radial inneres Flachelement
- 32: Zweites, radial äußeres Flachelement
- 33: Ringkante, Ringvorderkante
- 34: Versteifungsstrebe
- 35: Schwenkgelenk
- 40: Aktuator
- 41: Antrieb
- 42: Antriebsstange
- 50: Schwenkhebel
- 51: Führungshebel
- 60: Gleitelement
- Ax: Axialrichtung
- R: Radialrichtung
- U: Umfangsrichtung
- L: Längsachse der Antriebsstange
- S: Schwenkachse des Schwenkhebels an dem Verschlussring
- SL: Abstand zwischen Schwenk- und Längsachse
- α: Winkel zwischen den Flachelementen
- β-βiv: Winkel zwischen den Schwenkhebeln und/oder den Führungshebeln

## Patentansprüche

1. Luftführungssystem (10) für ein Flugtriebwerk (1) mit einem Hauptstromkanal (2) und einem Zweigkanal (3), insbesondere kann der Zweigkanal ein Nebenstromkanal und/oder ein Zapfluftkanal sein, wobei der Zweigkanal (3) an einem Verbindungsbereich (4) von dem Hauptstromkanal (2) abzweigt, umfassend
eine an oder in dem Verbindungsbereich (4) angeordnete Verschlussvorrichtung (20) zur Trennung des Zweigkanals (3) von dem Hauptstromkanal (2),
wobei die Verschlussvorrichtung (20) zumindest einen Verschlussring (30) zum Verschließen des Verbindungsbereichs (4) aufweist.

2. Luftführungssystem gemäß Anspruch 1, wobei der Verschlussring (30) aus zumindest zwei miteinander verbundenen zumindest in Umfangsrichtung (U) gebogenen Flachelementen (31, 32), insbesondere blechartigen ringförmigen Flachelementen (31, 32), ausgebildet ist.

3. Luftführungssystem gemäß Anspruch 2, wobei ein erstes Flachelement (31) des Verschlussrings (30) in Axialrichtung eben ausgebildet ist, um ein Gleiten in Axialrichtung zu ermöglichen.

4. Luftführungssystem nach Anspruch 2 oder 3, wobei ein zweites Flachelement (32) des Verschlussrings (30) in Axialrichtung (Ax) radial nach außen gekrümmt ausgebildet ist.

5. Luftführungssystem nach einem der vorangehenden 2 bis 4, wobei die beiden Flachelemente (31, 32) an einer Ringvorderkante (33), die insbesondere eine in Axialrichtung (Ax) vordere Kante des Verschlussrings (30) ist, miteinander verbunden sind, und bevorzugt einen Winkel (α) bilden.

6. Luftführungssystem nach einem der Ansprüche 2 bis 5, wobei die beiden Flachelemente (31, 32) durch eine Versteifungsstrebe (34), insbesondere zu einem Hohlkörper, verbunden sind.

7. Luftführungssystem nach einem der vorangehenden Ansprüche, wobei der Verschlussring (30), insbesondere mit dem eben ausgebildeten ersten Flachelement (31), über zumindest ein radial innen in dem Zweigkanal (3) befestigtes Gleitelement (60) gleitet, insbesondere wobei das Gleitelement (60) als ein Gleitstein aus einem Kunststoff, besonders bevorzugt aus einem Polyimid, ausgebildet ist.

8. Luftführungssystem nach einem der vorangehenden Ansprüche, wobei die Verschlussvorrichtung (20) einen, insbesondere genau einen, Aktuator (40) zum Verschieben des Verschlussrings (30) aufweist.

9. Luftführungssystem gemäß Anspruch 8, wobei der Verschlussring (30) von dem Aktuator (40) in eine Axialrichtung (Ax) und Umfangsrichtung (U) verschiebbar ist.

10. Luftführungssystem nach einem der Ansprüche 8 oder 9, wobei ein Antrieb (41) des Aktuators (40) radial außerhalb des Zweigkanals (3) angeordnet ist.

11. Luftführungssystem nach einem der Ansprüche 8 bis 10, wobei eine Antriebsstange (42), des Aktuators (40) von radial außerhalb des Zweigkanals (3) durch den Zweigkanal (3) und in ein den Hauptstromkanal (2) und den Zweigkanal (3) radial voneinander trennendes Zwischengehäuse (5) geführt und durch einen Verstellhebel (43) des Aktuators (40) mit dem Verschlussring (20) schwenkbar verbunden ist, um den Verschlussring (20) in Axialrichtung (Ax) und Umfangsrichtung (U) zu verschieben.

12. Luftführungssystem nach Anspruch 11, wobei zumindest ein Führungshebel (51) der Verschlussvorrichtung (10) mit dem Zwischengehäuse (5) schwenkbar verbunden ist, um eine Gleitbewegung des Verschlussrings (20) zu stabilisieren.

13. Flugtriebwerk (1) mit einem Hauptstromkanal (2) und einem Zweigkanal (3), wobei der Zweigkanal (3) an einem Verbindungsbereich (4) von dem Hauptstromkanal (2) abzweigt, umfassend ein Luftführungssystem (10) nach einem der vorangehenden Ansprüche.
